# EUROPEAN PATENT APPLICATION

(11) **EP 2 107 514 A1**
(43) Date of publication of application: **07.10.2009**
(21) Application number: 08251220.3
(22) Date of filing: 31.03.2008
(51) Int. Cl.: G06Q 10/00

(54) **Process monitoring**

(71) Applicant: British Telecommunications Public Limited Company, London Greater London EC1A 7AJ (GB)
(72) Inventor: The designation of the inventor has not yet been filed
(74) Representative: Lidbetter, Timothy Guy Edwin

(57) **Abstract**

A method of monitoring the execution of an ad hoc process or workflow, in which process execution data is combined with process node data. These data can be combined to compile a process workflow, which can be subsequently analysed to allow the performance of the process to be evaluated.

## Description

The present invention relates to an apparatus and a method for monitoring process execution, and in particular to an apparatus and a method for monitoring the execution of an ad hoc process.

Process monitoring for performance and compliance is becoming more important than ever particularly in today's dynamic business environment in which there is an increasing effort to use automation in task execution. Processes can be mainly categorised as following either a production workflow (PWF) or an ad hoc workflow (AWF).

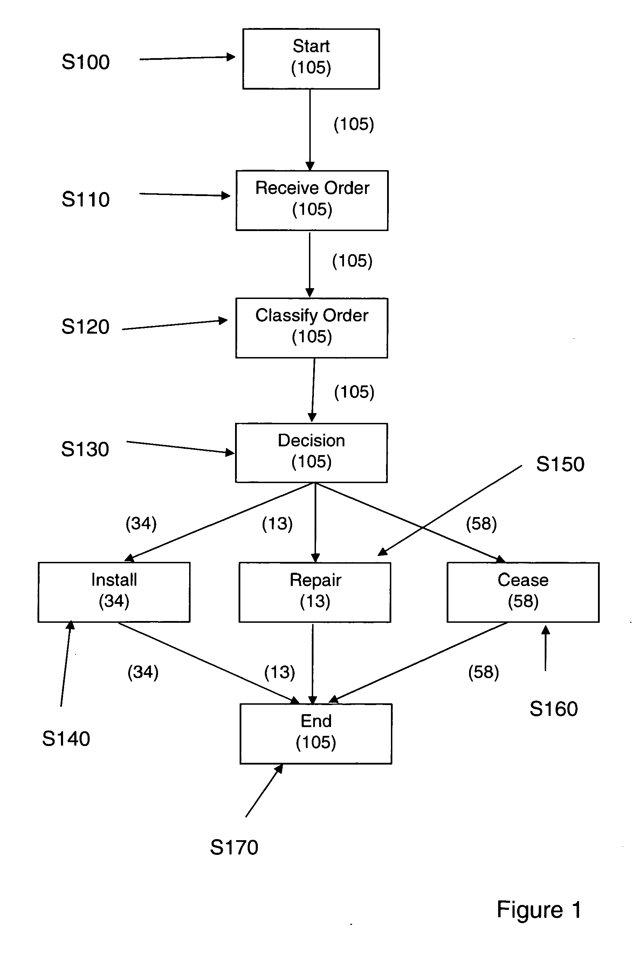

In PWFs the process execution path is very-well defined and the points of interaction by users or participating systems are set at the design time and are fixed during the execution. For example, Figure 1 shows a schematic depiction of a PWF in which the process starts at step S100 and proceeds through steps of receiving an order (S110), classifying the order (S120) and making a decision (S130). The result of the decision making step determines whether the workflow continues to one of Install (S140), Repair (S150) or Cease (S160) before the process ends at step S170. It will be seen for each of the steps of the workflow a numerical value is shown: this value indicates the number of instances of each process. Thus, the process is instantiated 105 times at step S100 and the steps of receiving an order, classifying the order and decision making are each made 105 times. The results of the decision making phase are that the install phase (S140) is carried out 34 times, the repair process (S150) is carried out 13 times and that the cease process (S160) is carried out 58 times. The next step for each of the install, repair and cease processes is the end process (S170) and thus this has 105 instances.

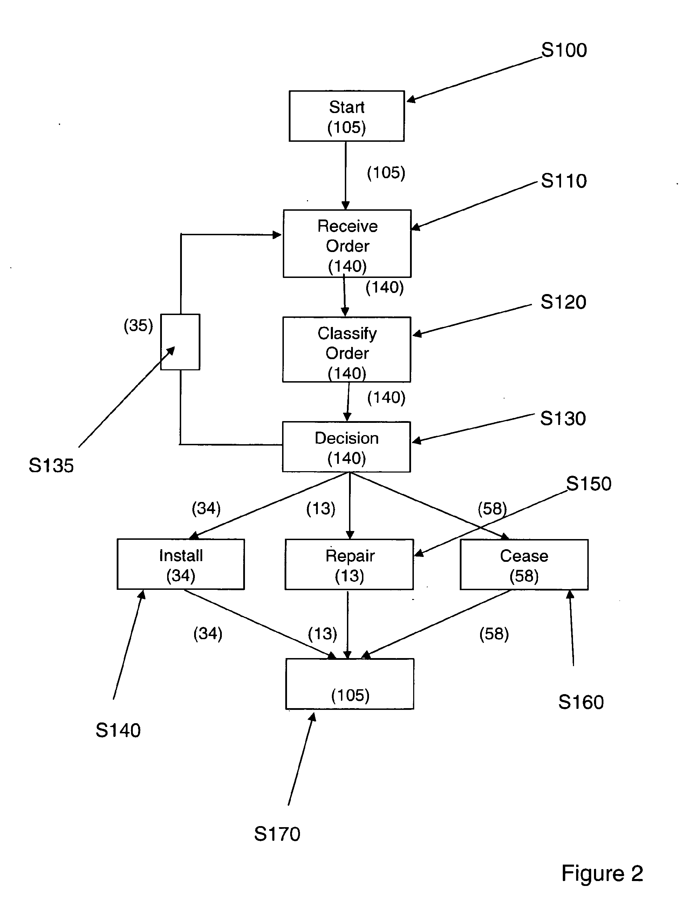

However, AWF process execution relies on the outcome of each task to determine which step will be executed next. AWF processes typically consist of a large number of tasks that can be linked together during execution in a manner that cannot always be anticipated when the process is being designed. AWF is not only restricted to manual processes where, for example, human users receive a task and after completion route it to a new participant depending on the outcome of the execution. Automated process execution, particularly when implemented using a common integration platform (e.g. an enterprise serves bus ESB), also allows AWF by employing a routing service (sometimes called Content Based Routing) that makes decisions on where to route the process to next (D Chappel, "Enterprise Service Bus" , Chapter 7, O'Reilly, 2004). Figure 2 shows a schematic depiction of a simple ad hoc work flow process, which is similar to the process described above with reference to Figure 1. The process starts at step S100 and proceeds through steps of receiving an order (S110), classifying the order (S120) and making a decision (S130). At step S130, the process may continue to one of Install (S140), Repair (S150) or Cease (S160) before the process ends at step S170: alternatively the process may return to the Receive Order step (S110) via the Review step (S135).

It will be seen for each of the steps of the workflow a numerical value is shown: this value indicates the number of instances of each process. Thus, the process is instantiated 105 times at step S100. It can be seen that the Review step is instantiated 35 times and thus the steps of receiving an order, classifying the order and decision making are each made 140 times. As 35 of the outcomes of the decision making step are to return to the Receive Order step, then 105 of the outcomes of the decision making step proceed to either the install, repair or cease process. Thus, the install phase (S140) is carried out 34 times, the repair process (S150) is carried out 13 times and that the cease process (S160) is carried out 58 times. The next step for each of the install, repair and cease processes is the end process (S170), which has 105 instances.

As more and more companies are moving towards service oriented architecture flexible business models, the task of process monitoring becomes increasingly important to assure quality of service and to manage service level agreements (SLAs). For example, there is a risk that telecommunications companies may become mere connectivity providers that support other companies in delivering content and services. To counter this risk, it will be necessary for telecommunications companies to provide a range of innovative communication services. This will require a delivery framework that allows services to be created and modified, regardless of the type of network platform they run on. Such a delivery framework, which may be based, for example, on Service Oriented Architecture (SOA), needs innovative methods for performance and compliance monitoring which is not possible with current technology.

PWF processes are rigid and do not allow participants any flexibility in advancing the process execution. This is a big advantage in terms of performance and conformance monitoring because it is quite easy to track exactly what happens at each point of the process, how long it took to execute each task, who executed/is executing a task and/or other execution attributes. AWF processes are completely the opposite, in that they offer participants a large degree of flexibility in determining the path of execution. Their drawback is that it becomes very difficult to track performance and compliance.

Consider the process model shown in Figure 1, where a PWF execution pattern has been applied. In this case it is not possible to route a task if a suitable transition does not exist. For example, if at the decision step (S130) it is found that the information available is not complete or incorrect, such that a decision cannot be made, then the process has to be returned to the receive order step (S110). If the workflow does not allow for this then a user is forced to terminate the process and create a new one. This is obviously a waste of time and resource and leads to a lot of confusion in tracking customer orders and processes.

If the process was executed using AWF then theoretically all nodes may be linked, via transitions, to all other nodes allowing complete flexibility (although rules can be used to prohibit certain transitions). Figure 2 shows the case where AWF allows the decision making stage (S130) to route the process back to the Receive Order stage (S110). Within 105 process instances, it can be seen that there are 35 routing occasions between the Decision node and the Receive Order node. Whilst this is a much more efficient execution when compared to the process described with reference to Figure 1, there are a number of issues regarding the monitoring of performance and compliance.

For example, how are the key performance indicators to be evaluated? In the example of Figure 2, there are 35 rerouting instances, and several of these instances might belong to one process instance. It is possible that one troublesome process instance had to be rerouted say 10 times while another 25 needed rerouting once only. Known process management systems shy away from looking at the details of the execution in monitoring the KPIs and simply address end to end process KPIs. This is understandable because it has not been possible to systematically track process execution and evaluate KPIs that are associated with flexible process execution. Additionally, compliance monitoring is difficult. For example, it is not possible to set compliance rules that can cover all the eventualities of a flexible execution. Either these rules are limited to very simple rules that are associated with a single task, or alternatively compliance checking is only performed after the process has been executed, with complex SQL queries being written to address one combination of events. Thus, it can be seen that there is no tool available that will allow the writing of rules that can be executed in real-time while the process is being performed.

According to a first aspect of the present invention there is provided a method of monitoring the execution of a process, the method comprising the steps of: a) acquiring process execution data from an ad hoc process; b) acquiring data relating to the nodes of the ad hoc process; and c) combining the data acquired in steps a) and b) to compile an ad hoc process workflow.

Step a) may comprise the further step of: i) receiving process execution data from an ad hoc process after the execution of each process step. Furthermore, step a) may also comprise the step of: ii) sending an instruction to the ad hoc process indicating which process node should be subsequently executed in the processing of the ad hoc process. Steps i) and ii) may be repeated until the ad hoc process terminates. Step b) may comprise the step of acquiring an identifier for each node of the ad hoc process. Also, step b) may comprise the step of acquiring the identity of the first node which is executed by the processing of the ad hoc process.

Preferably the ad hoc process workflow compiled in step c) is analysed to determine one or more performance measures of the ad hoc process.

According to a second aspect of the present invention there is provided a computer program product comprising computer executable code for performing any of the methods as described above.

According to a third aspect of the present invention there is provided process execution monitoring apparatus comprising: a process monitor configured, in use, to acquire process execution data and process node data from an ad hoc process; and a process evaluation module configure, in use, to compile an ad hoc process workflow in accordance with the data acquired by the process monitor.

An important issue with SOA is the flexibility of composing processes using any available services, which may be web services or internal services, for example those running on an enterprise service bus ESB. More and more companies are converting to a SOA model of operation and they will need new ways of performance and compliance monitoring that can handle the flexible approach of service composition.

With a method according to the present invention, if a production process changes at any time, for example if a new task is added or one is deleted, then all that is needed to use the new process structure is to change the list of tasks known by the process monitor (see below). The process monitor will examine the data and incorporate the changes in the new process flow. There is no need to change the process model as is the case with standard BPM products which work effectively only when the workflow is fixed.

The invention will now be described with reference to the following Figures, which are provided by way of example only, in which:
Figure 1 shows a schematic depiction of a simple process described using a production workflow (PWF);
Figure 2 shows a schematic depiction of a simple process described using an ad hoc workflow (AWF);
Figure 3 shows a schematic depiction of a typical process described using an ad hoc workflow;
Figure 4 shows a schematic depiction of a process management system according to the present invention;
Figure 5 shows a schematic depiction of a first expression tree; and
Figure 6 shows a schematic depiction of a second expression tree.

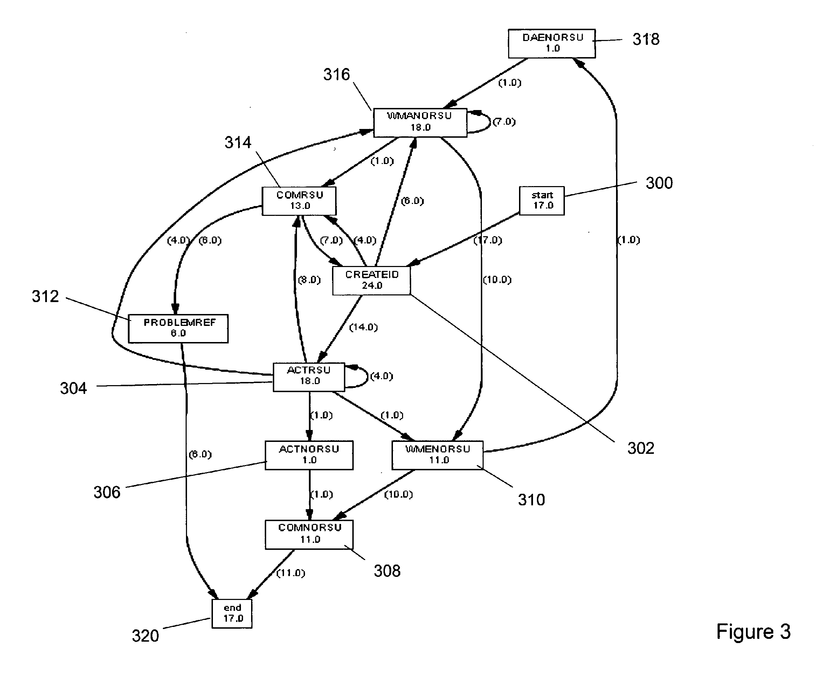

Figure 3 shows a schematic depiction of a typical process which is described using an ad hoc workflow. The only constraints on the process are that the process comprises a start node 300 which leads to the creation of a process instance 302 and that the process is terminated when it reaches an end node 320. The process comprises a further eight nodes DAENORSU, WMANORSU, COMRSU, PROBLEMREF, ACTRSU, ACTNORSU, WMENORSU, COMNORSU 304, 306, 308, 310, 312, 314, 316 & 318. After the process instance is created at the CREATEID node 302, then a process instance may pass through any of the other process nodes, in any order, until the end node 320 is reached. It should be noted that a process may loop back to a node that it has just exited. The decision on where the process instance should go next is dependent upon the outcome of all the nodes that were executed within that specific instance (this is referred to as the flexible execution paradigm).

Figure 3 shows the results generated from the processing of seventeen instances, with lines connecting two nodes indicating a process transition from a first node to a second node: the direction of the process transition is indicated by an arrowhead. Figure 3 shows a numerical value in each node which indicates the number of times that that an instance passed through that node. Similarly, each transition is associated with a numerical value which indicates the number of times that a process passes along that particular transition. The process diagram shows no specific flow of activity between the nodes with a very large number of possible routes from the Start to the End nodes. The process may typically represent Web services in a SOA running on a number of independent computing platforms (although it should be noted that this does not exclude other kinds of tasks such as manual execution and/or interaction through a portal).

It is difficult to monitor or evaluate the performance of flexibly executed processes using known process management systems. Examples of the type of difficulty that would be encountered are given below:
• A user wants to write a key performance indicator (KPI) that produces the total time in service WMENORSU. Conventional process management tools would only allow the user to evaluate this KPI if the flow is fixed, i.e. that the service WMENORSU is only entered from a first further service and the process only ever proceeds to a second further service.. If the process flow executes this service a number of times, with a different pattern for each instance, then it will not be possible to obtain a consistently calculated KPI for all instances.
• A user wants to generate a rule, which may be required by an auditor, to raise an alarm every time a process calls service WMENORSU and then subsequently calls service EXCNORSU (regardless of however and which other services were called in the interim period). Without a fixed workflow this kind of information can only be obtained by writing dedicated SQL queries on a process database after the process is completed. Such an approach can lead to inconsistencies or errors in evaluation because it is impossible to allow for all the possible combinations.

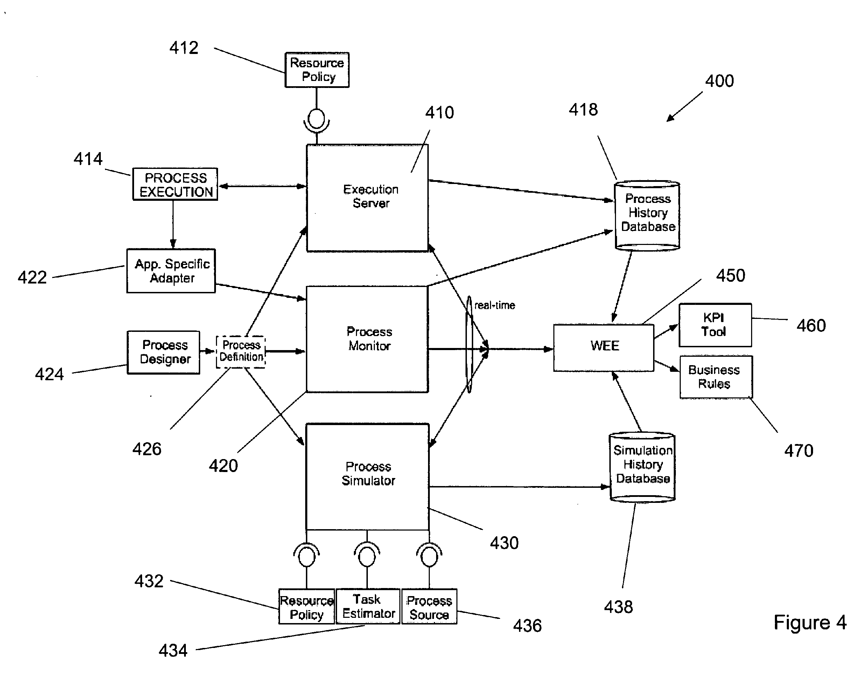

Figure 4 shows a schematic depiction of a process management system 400 according to the present invention. The system comprises a process execution server 410, execution server resource policy 412, process execution component 414, process monitor 420, application specific adaptor 422, process designer 424, process definition component 426, process simulator 430, process simulator resource policy 432, process simulator task estimator 434, process simulator process source 436, process history database 418, simulation history database 438, workflow evaluation engine 450, key performance indicator (KPI) tool 460 and business rules tool 470. It will be readily appreciated by those skilled in the art that the system described above with reference to Figure 4 is a conventional process management system with the exception of the application specific adapter 422, process monitor 420, workflow evaluation engine (WEE) 450, the KPI tool (460) and the business rules tool (470).

It will be understood that the process management system 400 will be in communication with a number of different components that represent and/or constitute the process that is being monitored. It will also be understood that the process may be any process that can be represented using an ad hoc work flow. For the sake of clarity the process that is being monitored by the process management system according to the present invention will be referred to as the production process in the below description. Furthermore, the structure and the function of the production process is not relevant to the teaching of the present invention and thus is not shown in the Figures or described below in any significant detail.

In operation, the process execution server 410 is responsible for controlling the production process flow by forwarding the process instances to their next tasks in the work flow. When a task is completed, process control is passed to the process execution server which consults the workflow evaluation engine 450 which determines which node the production process should be routed to next. The workflow evaluation engine 450 may comprise a routing decision point (not shown) which makes the determination as to which node the production process should be routed to next. The process execution server resource policy 412 allows the process execution server 410 to assign tasks to the actors of the production process. These actors may be the systems, components, etc., which are responsible for the execution of the tasks in the production process. The production process will have other process management systems (not shown) which creates, stores and manages production process data. The process execution tool 414 acts as a channel that can pass this production process data to process execution server 410 and the process monitor 420. If the production process data is not in a form that the process execution server and/or the process monitor is able to use then the process execution tool can translate or adapt the production process data into a more suitable format. Data that is received from the production process is stored in the process history database 418, along with any detail relating to the production process that is generated by the process execution server

It will be seen from the above that the process management system according to the present invention is able to interact with a production process. The process management system is also able to simulate the performance of a hypothetical or planned process. The process simulator 430 uses discrete event methods to simulate a hypothetical process. The process simulator may be used in the process design stage or in process re-engineering, to simulate different configurations of the process to determine the optimal settings for real-life execution.

The process simulator 430 is in communication with a process simulator resource policy 432, a task estimator 432 and a process source 434. The process simulator resource policy is similar to the process execution server resource policy 412 with the exception that the process simulator resource policy comprises virtual actors that represent the actors of a simulated process. The task estimator provides qualitative and/or quantitative values to the process simulator 430 on the likely result of executing a task. For example, a task estimator may estimate how long it will take to run a task, the likelihood of a task being executed successfully, the cost of a task being executed, the likely outcome of a simulated task, etc. The process source provides the process simulator with data that represents the number and type of jobs or process instances that enter a simulated process.

The process simulator resource policy, the task estimator and the process source provide the process simulator with the equivalent data that is supplied to the process execution server by the production process. The process sources and task estimators may comprise historical data (for example where the performance of a modified or re-engineered process is being simulated), data that is generated from statistical models of historical data, data that is generated from numerical modelling or a combination of a number of the above. The process simulator may also access data that is held within a simulation history database 438.

The process monitor 420 is responsible for extracting process execution data in real time from one or more process execution servers. The process management system 400 may comprise one or more process execution servers which are in communication with the process monitor 420 (similarly, the process management system 400 may comprise one or more process simulators), or alternatively the process monitor may be in communication with one or more process execution servers in other process management systems. If the process monitor is in communication with a process execution server in another process management system then an application specific adapter 422 may be needed to convert the data model of the external process execution server to one that is compatible with the data model used by the process monitor 420 and the workflow evaluation engine (WEE) 450. The process designer 424 is design tool which allows users to define the tasks that comprise a process and any task-related attributes. Preferably the process designer allows the user to create a graphical task definition. The process design may be converted to an XML process definition 426 which may be accessed by and processed by one or more of the process execution server, the process monitor or the process simulator.

In operation, process execution data is made available to the process monitor, usually (although not exclusively) via the application specific adapter. Furthermore, the process monitor has acquired all of the process constituent task node ids and the first task after the start point from the process designer (or alternatively from a process definition). The process monitor requires no information regarding the process flow except for the first task that is executed after the start node. If there are a number of possible tasks following the start node, then the process monitor will select a first task node from the range of possible options. Once the process monitor has all of the requires data, then the data can be processed to build a data model of the execution flow of the process. This process flow can be made available to a user as a graphical display, for example as shown in Figure 3.

If the process is changed at any time, for example if a new task is added or an existing task is deleted, then the process flow can be updated by changing the list of tasks that is held by the process monitor. The process monitor will then use the updated data set and will incorporate the changes to compile a new process flow. There is no need to change the process model as is the case with standard BPM products which work effectively only when the workflow is fixed.

The workflow evaluation engine (WEE) 450 receives data from the process execution server, the process monitor, the process simulator, the process history database and the simulation history database. The WEE can process this data to generate results at the KPI tool 460 and/or the business rules tool 470: the data is processed in accordance with KPI expressions or business rule expressions which are expressed in a Workflow Evaluation Language (WEL). The WEE comprises a flexible editor which allows the WEL expressions to be entered.

The WEL provides the flexibility to navigate through process nodes and transitions in a transparent way without having to know in advance the full detail of the process execution. The WEE evaluates the WEL expression and sends the results to the KPI tool (for performance reporting) or the Business Rules tool (for compliance monitoring).

The WEL can be used to navigate through the nodes in a process and obtain the attributes that are required. For process attributes, which have a single value for a specific process instance, the syntax is simply @attributeName.

For node attributes the structure is more complicated:
nodeSelection [navigation]* @ attributeName where;
   • nodeSelection is "NodeName . instanceSelection"
   • navigation can be either "transitionName" | this
   • instanceSelection can be any of the following first | last | at(number) | any

For the node selection, the keyword "this" is used when dealing with a node instance as the starting point. This applies to node rules, the definition of subprocess input attributes and conditions in decision nodes. Otherwise the node selection must be used to specify the node name and desired instance.

While 'first','last' and 'at(number)' are used to get a single task instance per process (or none if the selected task was never instantiated) the instance selector `any' provides all of the instances available for that task in all process instances. Once a desired instance has been selected, it is possible to identify adjacent instances using navigation commands, with '<' indicating an incoming transition and '>' indicating a leaving transition. For example Task1.first>tr1 indicates the node that is after the first instance of Task1 leaving through transition tr1. It is possible to chain navigation commands, for example: Task1.first>trA>trB. The use of WEL is described below with reference to two examples:

### Example 1: sum (WMENORSU.any@endTime - WMENORSU.any@startTime) ;

This expression obtains the total duration of all calls to service WMENORSU within each process instance.
- Example 2:: if (WMENORSU.first@startTime < DAENORSU.last@startTime)
then (@jobld)
else ( NULL ) ;

This expression obtains the unique identifier of each process instance that calls service WMENORSU and then subsequently calls service DAENORSU at any time after that. Process instances that do not meet this condition will be ignored.

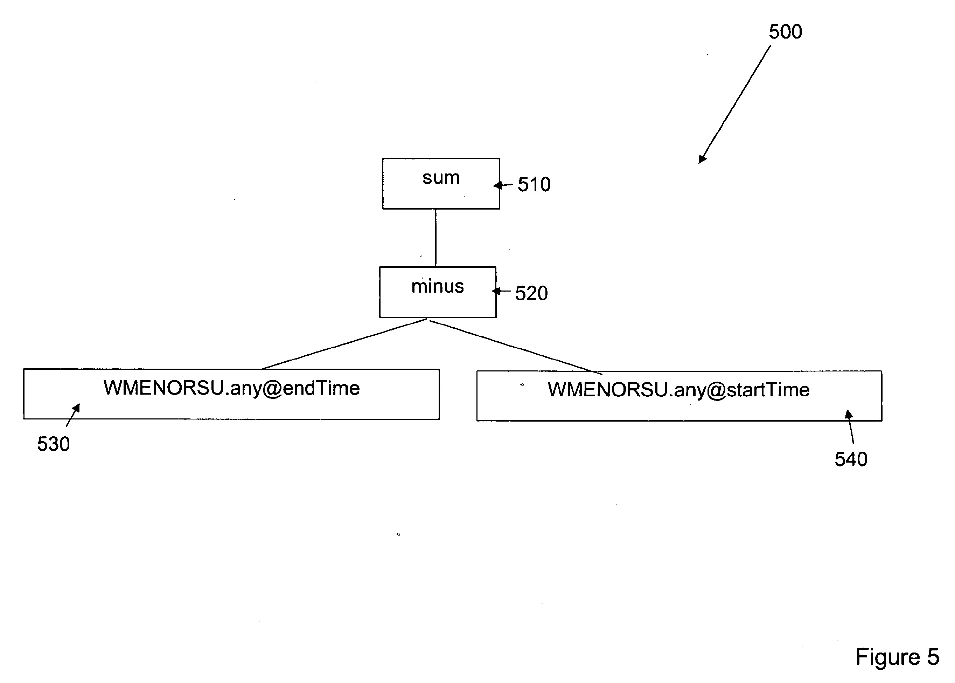

The WEE operates on the WEL expression. The expression string is parsed into an expression tree that can be executed with process data. Each part of the expression tree is populated with a software component (for example a Java Class) that is responsible for one simple part of the expression evaluation. So for example if we take Example 1 above, the WEE would construct the expression tree 500 that is depicted schematically in Figure 5.

Figure 5 shows a schematic depiction of a first expression tree. The expression tree 500 comprises a plurality of components which are either an operation (for example 'sum' operation 510 and 'minus' operation 520) or a data access component, which is identified by the @ operator in the syntax of WEL. Expression tree comprises two data access components 'WMENORSU.any@endTime' 530 and WMENORSU.any@startTime' 540. The data access components work on the process flow model that was produced by the Monitor component, that is the flow shown in Figure 3, to extract the correct data items and insert it in the expression evaluation engine to calculate the result of the expression as a numerical value.

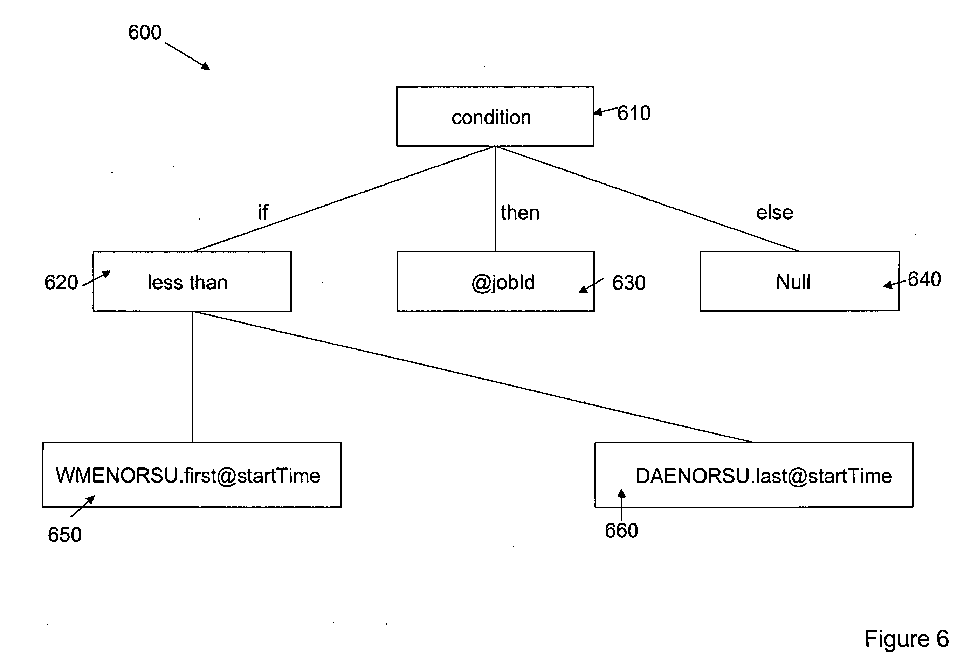

Example 2 above can be defined using the expression tree 600 which is schematically depicted in Figure 6. Figure 6 shows a schematic depiction of a second expression tree. The expression tree comprises a condition 610 which has three logical connections which define a conditional statement. For example, if the value of a first data access component (WMENORSU.first @ startTime 650) is less than (operation 620) the value of a second data access component (DAENORSU.last @ startTime 660) then (operation 630) the conditional expression has a value of 'True' and the related instance identity is obtained. If this is not the case then the 'else' operator causes the conditional expression to have a value of 'False' and no instance identity is obtained.

All the elements of the tree extend the abstract class Expression, which provides the following methods:
- isGlobal: indicates whether the expression contains a group operator for process instances.
- isConstant: indicates whether the expression doesn't have any access to attributes and therefore it is constant for any process.
- evaluate(Object,BPMKernel): evaluates the Object (that usually is a list of process instances or a node instance) using the BPMKernel to access the required data (BPMKernel is an interface that gives access to the process execution data).
- getScope: the scope is the most detailed unit active in the formula at this level. There are several levels:
   • null: constant expressions.
   • global: group expression for n process instances.
   • process: process attribute or task attribute not containing the 'any' instance operator.
   • this: uses the node instance for which the expression is being evaluated.

It will be understood from the foregoing discussion that the present invention will be implemented in software on a general purpose computer, or on a cluster of computing devices such as an application server. It will be understood that a number of process monitoring systems may be implemented on one or more application servers, along with other applications.

The functionality that enables a computing device to perform the method of the present invention may be provided by providing one or more additional computer programs or applications. It will be understood that such software may be deployed to such a computing device via download, for example via the internet, or on some physical media, for example, DVD, CD-ROM, USB memory stick, etc.

## Claims

1. A method of monitoring the execution of a process, the method comprising the steps of:
a) acquiring process execution data from an ad hoc process;
b) acquiring data relating to the nodes of the ad hoc process; and
c) combining the data acquired in steps a) and b) to compile an ad hoc process workflow.

2. A method according to claim 1, wherein step a) comprises the further step of:
i) receiving process execution data from an ad hoc process after the execution of each process step.

3. A method according to claim 2, wherein step a) comprises the further step of:
ii) sending an instruction to the ad hoc process indicating which process node should be subsequently executed in the processing of the ad hoc process.

4. A method according to Claim 3, wherein steps i) and ii) are repeated until the ad hoc process terminates.

5. A method according to any preceding claim wherein step b) comprises the step of acquiring an identifier for each node of the ad hoc process.

6. A method according to any preceding claim wherein step b) comprises the step of acquiring the identity of the first node which is executed by the processing of the ad hoc process.

7. A method according to any preceding claim wherein the ad hoc process workflow compiled in step c) is analysed to determine one or more performance measures of the ad hoc process.

8. A computer program product comprising computer executable code for performing a method according to any of claims 1 to 7.

9. A process execution monitoring apparatus comprising:
a process monitor configured, in use, to acquire process execution data and process node data from an ad hoc process; and
a process evaluation module configure, in use, to compile an ad hoc process workflow in accordance with the data acquired by the process monitor.
